(19) **Europäisches Patentamt European Patent Office Office européen des brevets**

(11) **EP 1 856 481 B1**

(12) **FASCICULE DE BREVET EUROPEEN**

(45) Date de publication et mention
de la délivrance du brevet:
**21.11.2012 Bulletin 2012/47**

(21) Numéro de dépôt: **06792446.4**

(22) Date de dépôt: **06.03.2006**

(51) Int Cl.:
*G01C 21/30* (2006.01)    *G08G 1/0969* (2006.01)

(86) Numéro de dépôt international:
**PCT/EP2006/060496**

(87) Numéro de publication internationale:
**WO 2006/133977 (21.12.2006 Gazette 2006/51)**

(54) **PROCÉDÉ DE LOCALISATION AU SEIN D'UN RÉSEAU D'UN ÉLÉMENT ASSOCIÉ À UNE POSITION GÉOGRAPHIQUE, SERVEUR DE LOCALISATION ET PROGRAMME D'ORDINATEUR CORRESPONDANTS**

VERFAHREN ZUM ORTEN EINES ZU EINEM GEOGRAPHISCHEN STANDORT GEHÖRENDEN ELEMENTES IN EINEM NETZ, ENTSPRECHENDER LOKALISIERUNGSSERVER UND COMPUTERPROGRAMM

METHOD FOR LOCATING INSIDE A NETWORK AN ELEMENT ASSOCIATED WITH A GEOGRAPHICAL POSITION, CORRESPONDING LOCATION SERVER AND COMPUTER PROGRAMME

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.03.2005 FR 0502279**

(43) Date de publication de la demande:
**21.11.2007 Bulletin 2007/47**

(73) Titulaire: **TDF**
**75732 Paris Cedex 15 (FR)**

(72) Inventeur: **EPS, Franck**
**F-35150 Janze (FR)**

(74) Mandataire: **Bioret, Ludovic**
**Cabinet Vidon**
**16 B, rue de Jouanet - B.P. 90333**
**35703 Rennes Cedex 07 (FR)**

(56) Documents cités:
**EP-A- 0 932 134    EP-A- 1 004 852**
**EP-A- 1 441 197    EP-A- 1 469 287**
**EP-A- 1 492 072    US-A1- 2002 194 170**

## Description

### 1. Domaine de l'invention

Le domaine de l'invention est celui de l'infographie et de la cartographie. Plus précisément, l'invention concerne une technique de mise en correspondance (ou en anglais "mapping") de localisations (identifiées par exemple sous forme de positions géographiques) sur un graphe représentatif d'un réseau (graphe de rues, de routes et/ou d'autoroutes par exemple, ou graphe d'un réseau fluvial, d'un réseau de distribution d'énergie, etc.).

L'invention s'applique notamment, mais non exclusivement, à la détermination d'informations de trafic sur un réseau routier ou autoroutier. Dans la suite de ce document, on présente plus particulièrement l'invention dans le contexte particulier de cette application. L'homme du métier étendra sans difficulté cet enseignement à tout autre type d'application dans lequel il peut être utile de mettre en correspondance une localisation et un graphe représentatif d'un réseau, de quelque nature qu'il soit.

### 2. Solutions de l'art antérieur

### 2.1 Contexte de la détermination d'informations de trafic

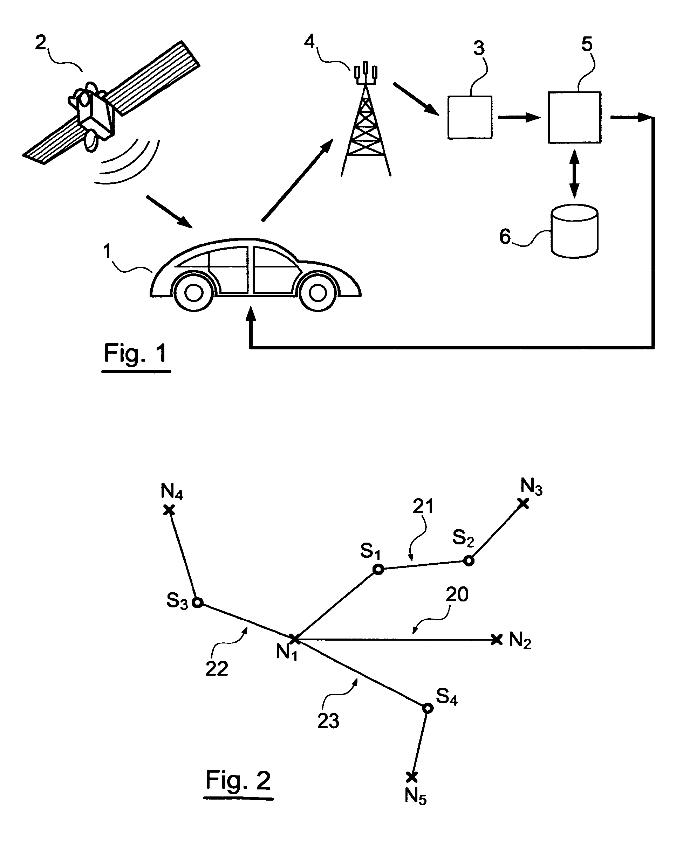

La figure 1 illustre plus particulièrement ce contexte particulier de détermination d'informations de circulation sur un réseau routier ou autoroutier. Un véhicule 1 est équipé d'un dispositif de localisation de type GPS ("Global Positioning System" pour "système de localisation mondial"). Il reçoit d'un satellite 2 sa position géographique, qu'il retransmet, après pré-traitement, à un serveur 3, via un réseau de radiocommunication 4, par exemple de type GSM ("Groupe Spécial Mobile"). Le serveur 3 reçoit ainsi à intervalles de temps réguliers une liste de positions GPS du véhicule 1, par exemple sous la forme de coordonnées (x, y) dans un repère cartésien : en effet, la voiture 1 calcule, à partir des données du satellite 2, une position par seconde. Ces positions peuvent être accumulées dans une liste, transmise au serveur 3 lorsqu'elle est pleine.

Ces positions géographiques sont fournies par le serveur 3 à un module d'édition de données 5, qui réalise le "mapping" ou la mise en correspondance de ces positions géographiques avec un graphe représentatif du réseau routier/autoroutier sur lequel circule le véhicule 1. Ce modèle de réseau est stocké dans une base de données 6.

Le module d'édition de données 5 génère alors, à partir du résultat du mapping obtenu pour une flotte de véhicules 1 du réseau, des informations de trafic de type dynamique, telles que la présence d'accidents, d'embouteillages, etc.

Ces informations de trafic peuvent être retransmises par diffusion ("broadcast") sur l'ensemble du réseau par RDS-TMC ("Radio Data System-Traffic Message Channel" pour "système de données radio- canal d'informations de trafic" décrit notamment dans la norme référencée ENV 12313/ EN ISO 14819), ou encore selon un protocole de type WAP ("Wireless Application Protocol" pour "protocole d'application sans fil").

L'invention concerne plus particulièrement le traitement réalisé par le module d'édition de données 5, consistant à mettre en correspondance les positions géographiques fournies par le serveur 3 et le modèle de réseau stocké dans la base de données 6.

### 2.2 Modèle de réseau

Selon les techniques de l'art antérieur, le modèle du réseau se compose d'un ensemble d'objets comprenant des noeuds, des arcs et des sommets. Il se représente d'une part selon un modèle topologique, et d'autre part selon un modèle topographique.

Le modèle topologique du réseau définit les déplacements dans le graphe logique fermé constitué par les seuls objets arcs et noeuds. Le modèle topographique définit quant à lui la représentation image du graphe logique constitué par les objets arcs, noeuds et sommets.

Le réseau est multimodal, c'est-à-dire qu'il peut être parcouru par un ensemble de véhicules de types hétérogènes, tels que des voitures, des vélos, des camions, ou même encore des piétons.

Un noeud est défini comme l'extrémité origine ou destination d'un arc. Il peut donc correspondre à la jonction entre plusieurs arcs, et symbolise un lieu, tel qu'une ville, une division administrative, une intersection routière, ou encore un échangeur routier. C'est un point de coordonnées $(x, y)$ dans un repère cartésien.

Un arc est quant à lui défini comme un linéaire unidirectionnel, orienté d'un noeud d'origine vers un noeud de destination. Il peut s'agir d'une polyligne brisée, c'est-à-dire que l'arc est tronçonné en arêtes, articulées autour de sommets de coordonnées $(x, y)$. L'arc est une représentation abstraite d'un support de déplacement entre deux noeuds, tel qu'une route ou une autoroute, indépendamment du nombre de voies de circulation sur ces axes. Pour un couple de noeuds d'origine et de destination, il y a donc unicité de l'arc, quel que soit le nombre de voies de circulation.

Un arc possède des attributs longueur et vitesse, cette dernière étant par exemple déterminée en fonction des limitations imposées par le code de la route sur l'axe de circulation considéré. La vitesse et la longueur sont constantes sur un arc donné.

Enfin, un sommet est une entité topographique correspondant à une articulation entre deux arêtes d'un arc.

La figure 2 illustre un tel modèle de réseau, comprenant :

- un premier arc 20, qui a pour origine le noeud $N_1$ et pour destination le noeud $N_2$ ;

- un deuxième arc 21, qui est la polyligne d'origine le noeud $N_1$, de destination le noeud $N_3$ et de sommets $S_1$ et $S_2$ ;
- un troisième arc 22 qui a pour origine le noeud $N_1$ et pour destination le noeud $N_4$, et qui comprend deux arêtes articulées autour du sommet $S_3$ ;
- un quatrième arc 23, qui est la polyligne orientée du noeud d'origine $N_1$ vers le noeud de destination $N_5$ en passant par le sommet $S_4$.

La position des objets noeuds et sommets du modèle de réseau est identifiée par un couple de coordonnées (x, y) dans un système de coordonnées cartésien, dans lequel on rappelle que l'abscisse x représente la distance horizontale par rapport au point d'origine et l'ordonnée y représente la distance verticale par rapport au point d'origine.

### 2.3 "Mapping" ou mise en correspondance

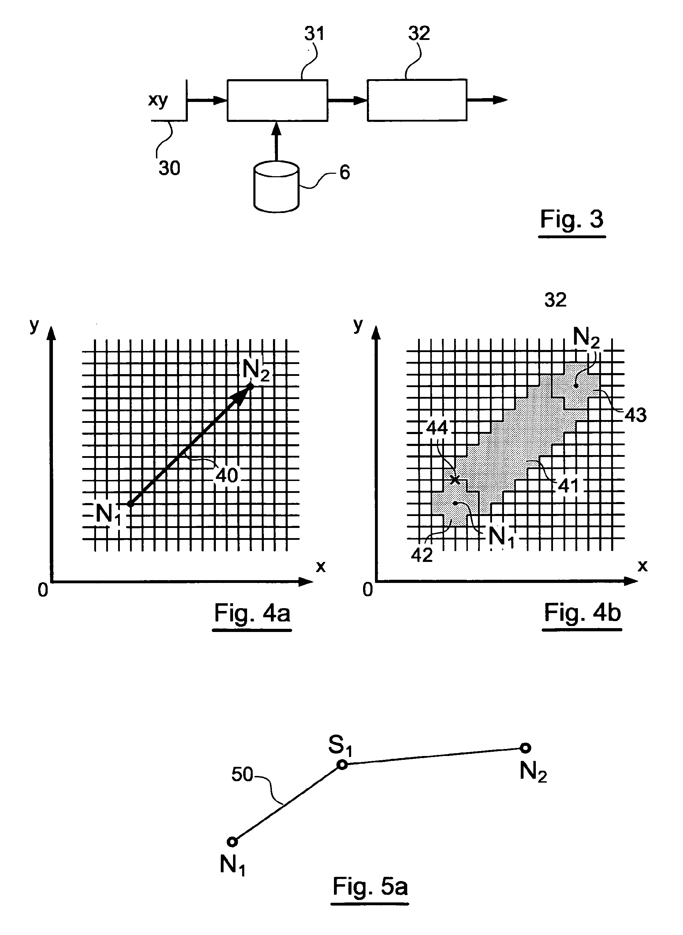

La figure 3 illustre l'opération de "mapping" réalisée par le module d'édition de données 5. Cette opération de "mapping" consiste à mettre en correspondance 31 une position géographique 30 (par exemple sous la forme d'un couple de coordonnées cartésiennes (x, y)) avec l'image du graphe topographique du réseau, stocké dans une base de données cartographique 6. Une opération ultérieure 32 de recherche de positionnement relatif permet d'améliorer la précision des informations délivrées en sortie du mapping 31, i.e. de localiser plus précisément l'élément considéré dans le réseau.

Selon les techniques de l'art antérieur, l'opération de "mapping" (ou "map matching") 31 repose sur l'utilisation d'une cartographie bitmap (c'est-à-dire matricielle, ou en mode point) d'un secteur géographique, classiquement de résolution 10 m x 10 m.

La cartographie en mode point, ou bitmap, est créée à partir des différents objets topographiques du modèle de réseau, en représentant par exemple les noeuds sous forme de surfaces de rayon r, et les arcs sous forme de polylignes de largeur à gauche $L_1$ et de largeur à droite $L_2$, comme illustré par les figures 4a et 4b. Sur la figure 4a, on a représenté un repère cartésien (O, x, y), associé à une matrice de quadrillage de pas 10 m, en abscisse comme en ordonnée, sur lequel on a illustré un arc 40 de noeud d'origine $N_1$ et de noeud de destination $N_2$. La figure 4b illustre le bitmap de cet arc 40 et de ces deux noeuds $N_1$ et $N_2$ : l'arc 40 est associé à une surface géographique 41 qui s'étend, par rapport à l'arc 40, sur 30 m en abscisse et sur 30 m en ordonnée (soit 3 points de la matrice). Chacun des noeuds $N_1$ et $N_2$ est associé à une surface géographique en forme de croix qui présente, dans sa plus grande dimension, un diamètre de 40 m (soit 4 points de la matrice). On notera que, dans l'exemple particulier de la figure 4b, les largeurs à gauche et à droite de l'arc sont égales.

A chaque position géographique de coordonnées (x, y), et donc à chaque couple de coordonnées (x, y) du bitmap, peuvent donc correspondre un ou plusieurs objets (arcs ou noeuds) du réseau, ou aucun.

Lors de l'opération 31 de mise en correspondance, on détermine donc la liste des objets du modèle de réseau susceptibles de correspondre à la position géographique (x, y) considérée. Ainsi, le mapping du point de coordonnées (x, y) référencé 44 sur la figure 4b génère une liste de deux objets comprenant le noeud $N_1$ et l'arc 40, car ce point appartient aux deux surfaces géographiques 41 et 42 associées à ces deux objets.

L'ensemble des objets du réseau (noeuds, arcs et sommets) est stocké dans une structure mémoire, appelée table de hash, qui comprend une liste de cases mémoire indexées en relatif. On rappelle qu'une table de hash est un ensemble d'entrées où chaque entrée est constituée d'une clef et d'une valeur. On ne peut avoir deux entrées ayant la même clef. A partir d'une clef, une table de hash peut retrouver très rapidement l'entrée correspondante.

Une telle table de hash permet de réduire les espaces vides au maximum : on définit un taux de remplissage optimum de 70-80% par exemple. De manière classique, on calcule, en fonction de la position géographique (x, y) considérée, la clef d'accès unique, qui permet d'extraire de la table la liste des objets correspondant effectivement à cette position (x, y). Pour obtenir une dispersion suffisamment grande, une telle clef d'accès comprend par exemple des composantes sinusoïdales. La présence dans la clef de fonctions périodiques (car sinusoïdales) permet d'extraire plusieurs objets de la table de hash dans le cas où la position (x,y) considérée se situe dans un carré du quadrillage correspondant à plusieurs objets du graphe de réseau.

Lorsque l'opération de mapping indique qu'une position géographique (x, y) correspond à un arc du réseau, on peut procéder à une recherche de positionnement relatif 32, permettant de localiser plus précisément l'élément considéré sur l'arc (ce qui est particulièrement avantageux en cas d'arc de grande longueur). Pour ce faire, on construit la droite reliant les noeuds d'origine et de destination de l'arc (qui peut correspondre à l'arc lui-même s'il ne contient pas de sommet d'articulation entre deux arêtes). On trace ensuite la perpendiculaire à cette droite passant par le point de coordonnées (x, y) : le point d'intersection de ces deux droites permet de définir un positionnement relatif du point sur l'arc, qui est fonction du rapport des longueurs du segment reliant le noeud d'origine au point d'intersection et de l'arc lui-même. Ce positionnement relatif est exprimé en 1/256e de longueur d'arc, sur 8 bits.

Les documents D1 = EP 1 492 072 et D2 = EP 1 441 197 traitent de la représentation de réseaux routiers sous forme de noeuds, d'arcs et de sommets. D1 cherche à accélérer le traitement de positionnement en utilisant une reconnaissance de forme dans un graphe alors que D2 utilise la mise en correspondance de portion du réseau routier.

**3. Inconvénients de l'art antérieur**

Cette technique de "mapping" et de recherche de positionnement relatif de l'art antérieur présente de nombreux inconvénients.

Tout d'abord, la résolution de la cartographie n'est pas facilement modifiable, puisqu'elle est définie a priori lors de la construction du quadrillage, par un outil dédié, ce quadrillage étant ensuite figé (en l'espèce 10 m x 10 m),.

Ensuite, la construction de la cartographie, et du bitmap de chacun des objets du réseau (voir figure 4b) est une tâche particulièrement fastidieuse et consommatrice de ressources. Le stockage de cette cartographie en mode point (bitmap) (donc de tous les objets noeuds, arcs et sommets du graphe de réseau) dans une structure mémoire de type table de hash nécessite ensuite un volume de stockage important (de l'ordre de 100 à 200 Mo pour stocker un graphe de réseau comptant environ 7000 arcs et 5000 noeuds pour une surface de 64 km par 64 km décrivant l'agglomération parisienne).

Outre cet important coût mémoire, un autre inconvénient de cette technique est la lenteur d'accès à la structure de mémorisation de la cartographie, dès qu'elle compte un nombre d'objets (noeuds, arcs et sommets) important (mais nécessaire pour représenter un réseau réel).

Un autre inconvénient de cette technique de l'art antérieur réside dans la technique de recherche de positionnement relatif sur un arc du réseau. En effet, selon cette technique, le positionnement relatif du déplacement sur l'arc est calculé sur la droite reliant les noeuds d'origine et de destination de l'arc, c'est-à-dire sur la droite "à vol d'oiseau".

Un premier inconvénient de cette technique est donc que la précision du positionnement relatif diminue lorsque le nombre de sommets de l'arc augmente, ces derniers n'étant pas pris en compte lors de cette recherche. En effet, plus l'arc compte de sommets, et plus on peut, en règle générale, considérer que son comportement s'éloigne de celui de la droite dite "à vol d'oiseau".

Un deuxième inconvénient de cette technique est que le positionnement relatif est exprimé en $1/256^e$ de longueur d'arc, et que sa précision diminue donc lorsque la longueur de l'arc augmente.

Enfin, un dernier inconvénient de cette technique de mapping et de positionnement relatif est que deux opérations successives (mapping et positionnement relatif) sont nécessaires pour obtenir une localisation d'un élément sur le graphe du réseau.

**4. Objectifs de l'invention**

L'invention a notamment pour objectif de pallier ces inconvénients de l'art antérieur.

Plus précisément, un objectif de l'invention est de fournir une technique de localisation d'un élément au sein d'un réseau, par mise en correspondance d'une position géographique de cet élément et d'un graphe du réseau, qui soit moins coûteuse en ressources, et notamment en ressources mémoire, que les techniques de l'art antérieur. Notamment, l'invention a pour objectif de proposer une telle technique qui permette un stockage "léger" en mémoire de la cartographie du réseau considéré, et qui, en conséquence, permette de gérer un réseau modélisé par un nombre important d'objets (typiquement plus de 20000 arcs).

Un autre objectif de l'invention est de fournir une telle technique qui permette une modification facile de la résolution de la cartographie du réseau, qui ne soit pas figée a priori.

L'invention a aussi pour objectif de proposer une telle technique qui soit plus rapide et plus performante que les techniques de l'art antérieur.

L'invention a encore pour objectif de proposer une telle technique qui présente une précision accrue par rapport aux techniques de l'art antérieur, notamment en ce qui concerne le positionnement d'un élément sur un arc du réseau. Notamment, un objectif de l'invention est d'accroître la précision du positionnement relatif d'un élément sur un arc lorsque cet arc est de longueur importante.

L'invention a enfin pour objectif de fournir une telle technique qui délivre un positionnement sur le réseau dont la précision puisse être facilement configurée, en fonction de l'application considérée ou des ressources disponibles.

**5. Caractéristiques essentielles de l'invention**

Ces objectifs, ainsi que d'autres qui apparaîtront par la suite, sont atteints à l'aide d'un procédé de localisation au sein d'un réseau d'un élément associé à une position géographique, comprenant une étape de mise en correspondance de ladite position géographique et d'un graphe représentatif dudit réseau.

Selon l'invention, ledit graphe représentatif dudit réseau est mémorisé sous la forme d'une liste d'objets comprenant au moins deux noeuds, et ladite étape de mise en correspondance comprend des sous-étapes successives de :

- ajout à ladite liste d'objets d'au moins un objet correspondant à un sommet intermédiaire sur un arc dudit graphe, un arc étant borné par deux noeuds dudit graphe, à savoir un noeud d'origine et un noeud de destination ;
- détermination d'au moins un objet de ladite liste d'objets, appelé objet sélectionné, correspondant sensiblement à ladite position géographique.

Ainsi, l'invention repose sur une approche tout à fait nouvelle et inventive du "mapping" de positions géographiques sur un graphe, ou modèle, de réseau. En effet, l'invention propose une toute nouvelle approche de mémorisation de la cartographie du réseau, selon laquelle on ne mémorise plus les arcs du réseau, mais seulement les noeuds de ce réseau. Le modèle du réseau s'identifie donc à une image vectorielle, dans laquelle les vecteurs (i.e. les arcs) ne sont plus représentés : seuls les noeuds étant définis, on réduit considérablement le nombre d'objets à stocker et on obtient ainsi un gain conséquent, tant en place mémoire occupée qu'en performance et en temps d'accès à la cartographie.

En outre, on n'utilise plus de bitmap des objets arcs et noeuds du réseau, ce qui simplifie considérablement la construction de la cartographie et permet de s'affranchir de la résolution prédéfinie et figée liée aux dimensions du quadrillage utilisé pour le bitmap. Selon l'invention, on peut donc modifier facilement la résolution de la cartographie, en fonction des besoins ou de l'application considérée.

En lieu et place du bitmap, la nouvelle méthode de l'invention repose sur la construction de sommets intermédiaires, le long du parcours des arcs du réseau. Ces sommets intermédiaires n'existent pas dans la définition initiale de la cartographie, et sont virtuellement positionnés géographiquement. La résolution est alors paramétrable, en fonction de la position des sommets intermédiaires que l'on ajoute sur les arcs.

Lors de la mise en correspondance de la position géographique de l'élément considéré et du graphe du réseau, on détermine donc un ensemble d'objets du réseau sur lesquels est susceptible de se situer l'élément considéré, cet ensemble d'objets comprenant un ou plusieurs noeuds et/ou un ou plusieurs sommets intermédiaires.

On notera que par "élément", on entend ici aussi bien un utilisateur du réseau qu'un dispositif mobile, tel qu'un véhicule équipé d'un GPS, le GPS lui-même, un radiotéléphone, ... et plus généralement toute entité identifiable par sa position géographique.

Avantageusement, ladite liste d'objets comprend également au moins un sommet correspondant à une articulation entre deux arêtes d'un desdits arcs.

En effet, les arcs peuvent être des polylignes brisées entre deux noeuds d'origine et de destination, qui s'articulent autour de sommets que l'on mémorise également dans le graphe représentatif du réseau.

Préférentiellement, la distance dudit ou desdits objet(s) sélectionné(s) à ladite position géographique est inférieure à un rayon de sélection prédéterminé. On choisit ainsi tous les objets situés dans un disque centré sur la position géographique considérée, et de rayon de sélection R.

De manière avantageuse, ladite position géographique est exprimée sous la forme d'un couple de coordonnées (x, y) dans un repère cartésien.

Préférentiellement, ledit ou lesdits sommet(s) intermédiaire(s) sont construits par suréchantillonnage d'un desdits arcs, chacun desdits sommets intermédiaires étant distant d'un noeud, ou sommet, voisin d'une distance de suréchantillonnage prédéterminée.

Par exemple, comme décrit plus en détail dans la suite de ce document, chaque sommet intermédiaire est distant du noeud, du sommet, ou d'un autre sommet intermédiaire qui le précède de la distance de suréchantillonnage.

Selon une caractéristique avantageuse de l'invention, lesdits objets sélectionnés formant une succession de noeuds et/ou de sommets d'un desdits arcs, un tel procédé comprend également une étape de recherche de positionnement relatif dudit élément sur ledit arc délivrant un intervalle, appelé "intervalle de mapping", dont les bornes inférieure et supérieure sont fonction des premier et dernier objets de ladite succession. En effet, lorsqu'on détecte que l'utilisateur, ou le terminal mobile, est probablement sur un arc du réseau, il est particulièrement intéressant de pouvoir le localiser plus précisément sur cet arc.

De manière préférentielle, ladite borne inférieure, respectivement supérieure, dudit intervalle de mapping est déterminée en fonction du rapport de la longueur d'un vecteur reliant ledit noeud d'origine dudit arc et ledit premier objet de ladite succession, respectivement ledit dernier objet de ladite succession et ledit noeud de destination dudit arc, et de la longueur dudit arc.

L'invention concerne aussi un programme d'ordinateur comprenant des instructions de code de programme pour l'exécution des étapes du procédé de localisation décrit précédemment lorsque ledit programme est exécuté par un microprocesseur.

L'invention concerne encore un produit programme d'ordinateur comprenant des instructions de code de programme enregistré sur un support utilisable dans ou par un ordinateur, ledit programme permettant la localisation au sein d'un réseau d'un élément associé à une position géographique, ledit programme comprenant des moyens de programmation lisibles par ordinateur pour effectuer une étape de mise en correspondance de ladite position géographique et d'un graphe représentatif dudit réseau,

caractérisé en ce que ledit produit programme d'ordinateur comprend également :

- des moyens de programmation lisibles par ordinateur pour accéder à une unité de mémorisation dudit graphe sous la forme d'une liste d'objets comprenant au moins deux noeuds ;
- des moyens de programmation lisibles par ordinateur pour effectuer une sous-étape d'ajout à ladite liste d'objets d'au moins un objet correspondant à un sommet intermédiaire sur un arc dudit graphe, un arc étant borné par deux noeuds dudit graphe, à savoir un noeud d'origine et un noeud de destination ;
- des moyens de programmation lisibles par ordinateur pour effectuer une sous-étape de détermination d'au moins un objet de ladite liste d'objets, appelé objet sélectionné, correspondant sensiblement à ladite position géographique.

L'invention concerne enfin un serveur de localisation, au sein d'un réseau, d'un élément associé à une position géographique, comprenant des moyens de mise en correspondance de ladite position géographique et d'un graphe représentatif dudit réseau. Un tel serveur comprend des moyens d'accès à une unité de mémorisation dudit graphe sous la forme d'une liste d'objets comprenant au moins deux noeuds, et lesdits moyens de mise en correspondance comprennent des moyens de :

- ajout à ladite liste d'objets d'au moins un objet correspondant à un sommet intermédiaire sur un arc dudit graphe, un arc étant borné par deux noeuds dudit graphe, à savoir un noeud d'origine et un noeud de destination ;
- détermination d'au moins un objet de ladite liste d'objets, appelé objet sélectionné, correspondant sensiblement à ladite position géographique.

## 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1, déjà présentée en relation avec l'art antérieur, présente le principe général de la détermination d'informations de trafic dans un réseau routier emprunté par des véhicules équipés de dispositifs de localisation de type GPS ;
- la figure 2, également présentée en relation avec l'art antérieur, illustre un graphe ou modèle du réseau routier de la figure 1 ;
- la figure 3 décrit les étapes de mapping et de recherche de positionnement relatif mises en oeuvre par le module d'édition de données de la figure 1 ;
- les figures 4a et 4b présentent le principe de la cartographie en mode point et du bitmap des arcs et noeuds du réseau utilisé selon les techniques de l'art antérieur ;
- les figures 5a à 5f présentent les étapes successives du procédé de localisation de l'invention.

## 7. Description d'un mode de réalisation de l'invention

Le principe général de l'invention repose, d'une part sur la mémorisation de la cartographie du réseau sous la forme d'une liste d'objets ne comprenant que les noeuds et sommets du réseau, mais pas les arcs, et d'autre part sur la construction de sommets intermédiaires le long des arcs lors du "mapping" d'une position géographique sur le graphe du réseau.

On présente, en relation avec les figures 5a à 5f, les différentes étapes mises en oeuvre selon l'invention lors de la mise en correspondance de la position géographique d'un élément (un utilisateur du réseau, un véhicule ou un dispositif de type GPS par exemple) et de la cartographie, ou graphe du réseau.

Par souci de simplification, on considère une portion simple du réseau, illustrée sur la figure 5a, à savoir l'arc 50. Cet arc 50 est la polyligne d'origine le noeud N1, de destination le noeud N2, et de sommet SI, qui correspond à l'articulation entre deux arêtes de l'arc 50.

On fixe une distance de suréchantillonnage des arcs, en vue de la construction de sommets intermédiaires sur l'arc 50. Cette distance est déterminée en fonction de l'application considérée, ou de la précision souhaitée. Elle est variable selon la localisation des arcs de la cartographie du réseau. Par exemple, dans le contexte de la détermination d'informations de trafic sur un réseau routier, on fixe cette distance de suréchantillonnage égale à 10 m en urbain. Elle peut en effet varier selon que l'on se trouve en environnement urbain ou interurbain.

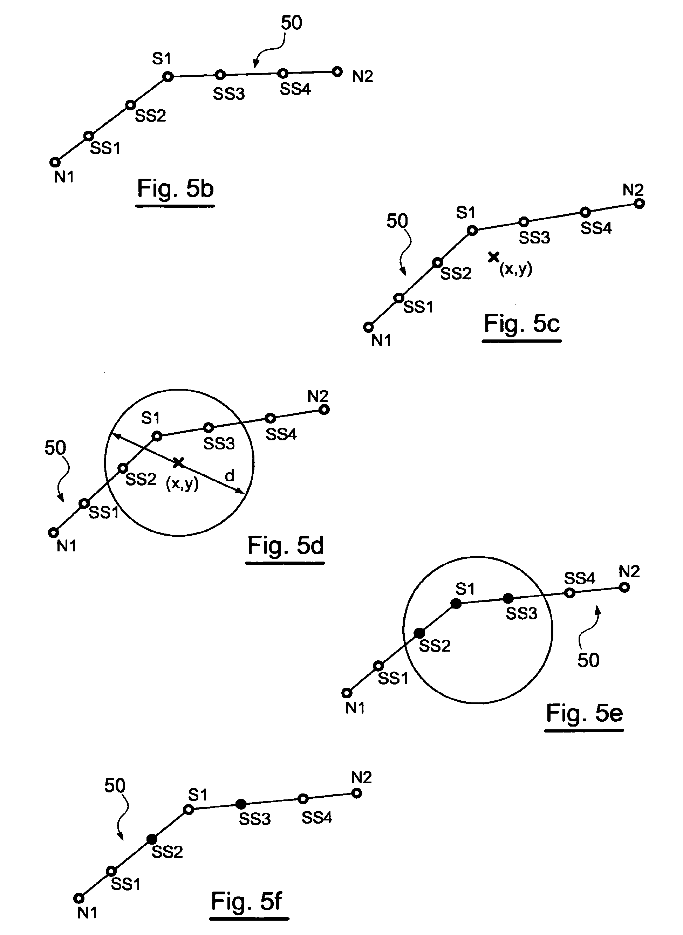

On suréchantillonne donc l'arc 50, ce qui a pour effet de créer quatre sommets intermédiaires SS1, SS2, SS3 et SS4 illustrés sur la figure 5b. Chacun de ces sommets intermédiaires est distant du noeud ou du sommet qui le précède de la distance de suréchantillonnage, soit 10 m (dans une variante de réalisation, la distance de suréchantillonnage pourrait aussi être fixée entre le sommet intermédiaire et le noeud ou sommet qui le suit). Ainsi, le premier sommet intermédiaire SS1 est distant du noeud N1 qui le précède de 10 m, et le deuxième sommet intermédiaire SS2 est distant du sommet intermédiaire SS1 qui le précède de 10 m. Le nombre de sommets intermédiaires dépend de la longueur de l'arête entre le noeud d'origine N1 et le sommet S1 : en l'espèce, la longueur de cette arête est égale ou supérieure à 30 m mais inférieure à 40 m puisqu'il n'y a pas de troisième sommet intermédiaire SS3 sur cette arête.

De la même façon, le troisième sommet intermédiaire SS3 est construit à 10 m du sommet S1 qui le précède, et le dernier sommet intermédiaire SS4 est construit à une distance de 10 m du sommet intermédiaire SS3 qui le précède.

La figure 5c illustre la position géographique (x, y) d'un dispositif mobile, par exemple de type GPS, en déplacement dans le réseau.

On fixe un diamètre de sélection d, qui est constant pour tous les dispositifs mobiles d'un même type. Par exemple, on fixe la valeur usuelle du diamètre de sélection à d = 20 m pour une flotte de mobiles GPS. Dans l'exemple de la figure 5d, on a choisi d = 30 m.

On sélectionne alors l'ensemble des noeuds et sommets (intermédiaires ou non) du graphe du réseau dont la distance à la position géographique (x, y) du mobile considéré est inférieure au rayon de sélection (soit à la moitié du diamètre de sélection). Pour ce faire, on calcule la longueur de chacun des vecteurs reliant le point de coordonnées (x, y) et l'un des noeuds ou sommets (intermédiaires ou non) du graphe de réseau. Les vecteurs qui ont une longueur inférieure au rayon de sélection sont sélectionnés.

Lors de cette opération, on scanne la table dans laquelle sont mémorisés tous les nœuds et sommets du réseau, qui est triée en fonction de la position géographique de ces objets. Pour accélérer la recherche, on peut par exemple procéder par dichotomie. On parcourt ainsi la table dans le sens des x croissants, puis dans le sens des y croissants, à partir de la position géographique (x, y) du mobile considéré.

Dans l'exemple de la figure 5e, on retient donc les sommets SS2, S1 et SS3 qui sont inscrits dans le cercle centré en (x, y) et de diamètre égal au diamètre de sélection d.

On ne retient ensuite que les extrémités de cette succession de sommets SS2, SI, SS3, à savoir les sommets intermédiaires SS2 et SS3, comme illustré sur la figure 5f. L'intervalle [SS2, SS3] forme l'intervalle de mapping, qui constitue la solution du procédé de localisation de l'invention.

Ainsi, alors que les techniques de l'art antérieur auraient consisté à retenir le sommet le plus proche du point (x, y), par construction de la droite "vol d'oiseau", l'invention propose quant à elle de retenir un intervalle de solutions. Dans le contexte de la détermination d'informations de trafic, dans lequel le "mapping" est effectué pour une large flotte de véhicules, on obtient ainsi un grand nombre d'intervalles de solution (un par véhicule), qui peuvent notamment se recouvrir. Une telle superposition des intervalles est un bon indicateur de l'accumulation de véhicules dans cette zone du réseau routier, et donc de la présence d'un embouteillage sur l'arc considéré.

Pour plus de précision, on exprime cet intervalle de mapping en pourcentage entier de l'arc considéré. La valeur obtenue pour les bornes inférieure et supérieure de l'intervalle est arrondie à l'entier le plus proche. Les pourcentages minimum et maximum sont retenus. La marge d'erreur de la solution de l'invention est donc inférieure à 1%, ce qui est particulièrement satisfaisant.

Ainsi, dans l'exemple de la figure 5f, la borne inférieure de l'intervalle de mapping est égale au rapport de la longueur du vecteur entre le nœud d'origine N1 et le deuxième sommet intermédiaire SS2 et de la longueur de l'arc 50.

La borne supérieur de l'intervalle de mapping est quant à elle égale au rapport de la longueur des vecteurs entre le nœud d'origine N1 et le troisième sommet intermédiaire SS3 (via le sommet SI) et de la longueur de l'arc 50.

On considère l'exemple numérique particulier suivant :

- l'arc 50 a une longueur de 60 m ;
- le sommet S1 est situé à 30 m du nœud d'origine N1 et du nœud de destination N2 ;
- la distance de suréchantillonnage est fixée à 10 m ;
- le premier sommet intermédiaire SS1 est distant du nœud d'origine N1 de 10 m, et est donc localisé à

$$\frac{10m}{60m} = 16,67\%$$ de la longueur de l'arc 50 ;

- le deuxième sommet intermédiaire SS2 est distant du nœud d'origine N1 de 20 m, et est donc localisé à $$\frac{20m}{60m} = 33,34\%$$ de la longueur de l'arc 50 ;

- le troisième sommet intermédiaire SS3 est distant du sommet S1 de 10 m, donc distant du nœud d'origine N1 de 40 m, et est donc localisé à $$\frac{40m}{60m} = 66,67\%$$ de la longueur de l'arc 50 ;

- le quatrième sommet intermédiaire SS4 est distant du sommet S1 de 20 m, donc distant du nœud d'origine N1 de 50 m, et est donc localisé à $$\frac{50m}{60m} = 83,34\%$$ de la longueur de l'arc 50.

En fixant le diamètre de sélection à d = 30 m, cela conduit, lors du "mapping", à sélectionner les deuxième et troisième sommets intermédiaires SS2 et SS3. Le résultat de la localisation du mobile de coordonnées (x, y) est donc l'intervalle de mapping [20 m, 40 m], soit en arrondissant à l'entier le plus proche, [33 %, 67 %] de l'arc 50.

On localise donc l'élément de position géographique (x, y) sur l'arc 50, sur le tronçon d'arc correspondant au deuxième tiers de sa longueur.

Ainsi, une seule opération de "mapping" a été nécessaire pour réaliser cette localisation, ce qui constitue une amélioration par rapport à la technique antérieure selon laquelle deux opérations successives de "mapping" et de recherche de positionnement relatif auraient été nécessaires.

Comme mentionné précédemment, l'invention s'applique notamment à la détermination d'informations de trafic, ou de conditions de circulation sur un réseau routier ou autoroutier. En France, la cartographie du réseau peut ainsi être construite à partir de la base de données SETRA (Service d'Etudes Techniques des Routes et Autoroutes).

Cette base de données SETRA est une base de données relationnelle qui regroupe l'ensemble des tables suivantes :

- type d'objets ;
- linéaires ;
- points (ou nœuds) ;
- aires.

Les aires sont elles-mêmes découpées en zones administratives, liées notamment à l'organisation des agglomérations. Les points, ou nœuds, sont classiquement situés au niveau des grands échangeurs routiers et autoroutiers, et sont organisés dans la table sous forme de liste chaînée. Les linéaires peuvent être des segments (i.e. des ensembles de points au niveau administratif, par exemple pour un département français) ou des routes (i. e. des ensembles de segments). Les routes sont toujours décrites dans les deux sens de circulation. La route constitue donc une liste chaînée de points que l'on peut parcourir dans le sens de chaînage positif, ou dans le sens de chaînage négatif. Enfin, le type d'objets permet, pour chacun des objets, d'identifier plus précisément sa nature : ainsi, pour un point, ou noeud, on indiquera s'il s'agit d'un échangeur, d'un croisement, etc. De même, pour un linéaire, on indiquera s'il s'agit d'une rocade, d'une autoroute, d'une route de campagne, etc.

Cette base de données SETRA permet principalement d'établir la cartographie du réseau français interurbain. L'invention s'applique également dans le contexte de la détermination d'informations de trafic en ville. La cartographie d'un réseau urbain peut être par exemple construite par accumulation de points GPS à partir d'une flotte de véhicules dédiés.

L'invention ne se limite bien sûr pas au seul mode de réalisation présenté dans ce document, ni à la seule application de détermination d'informations de trafic sur un réseau routier. L'invention peut par exemple être utilisée pour la gestion de réseaux de transport aérien, de réseaux fluviaux, de réseaux de communication ou encore de réseaux de transport d'énergie. L'expression des positions géographiques ne se limite bien sûr pas aux seules coordonnées cartésiennes, mais couvre également par exemple les coordonnées polaires ou sphériques. De même, la position géographique de l'élément à localiser peut être obtenue par toute technique adaptée, et ne se limite pas à la seule position GPS.

**Revendications**

1. Procédé de localisation, au sein d'un réseau, d'un élément associé à une position géographique, comprenant une étape de mise en correspondance de ladite position géographique et d'un graphe représentatif dudit réseau,
**caractérisé en ce que** ledit graphe représentatif dudit réseau est mémorisé sous la forme d'une liste d'objets comprenant au moins deux noeuds,
et **en ce que** ladite étape de mise en correspondance comprend des sous-étapes successives de :

    - ajout à ladite liste d'objets d'au moins un objet correspondant à au moins un sommet intermédiaire sur un arc dudit graphe, un arc étant borné par deux noeuds dudit graphe, à savoir un noeud d'origine et un noeud de destination ;
    - détermination d'au moins un objet de ladite liste d'objets, appelé objet sélectionné, correspondant à une position voisine de ladite position géographique.

2. Procédé de localisation selon la revendication 1, **caractérisé en ce que** ladite liste d'objets comprend également au moins un sommet correspondant à une articulation entre deux arêtes d'un desdits arcs.

3. Procédé de localisation selon l'une quelconque des revendications 1 et 2, **caractérisé en ce que** la distance dudit ou desdits objet(s) sélectionné(s) à ladite position géographique est inférieure à un rayon de sélection prédéterminé.

4. Procédé de localisation selon l'une quelconque des revendications 1 à 3, **caractérisé en ce que** ladite position géographique est exprimée sous la forme d'un couple de coordonnées (x, y) dans un repère cartésien.

5. Procédé de localisation selon l'une quelconque des revendications 1 à 4, **caractérisé en ce que** ledit ou lesdits sommet(s) intermédiaire(s) sont construits par suréchantillonnage d'un desdits arcs, chacun desdits sommets intermédiaires étant distant d'un noeud, ou sommet, voisin d'une distance de suréchantillonnage prédéterminée.

6. Procédé de localisation selon l'une quelconque des revendications 1 à 5, **caractérisé en ce que**, lesdits objets sélectionnés formant une succession de noeuds et/ou de sommets d'un desdits arcs, ledit procédé comprend également une étape de recherche de positionnement relatif dudit élément sur ledit arc délivrant un intervalle, appelé "intervalle de mapping", dont les bornes inférieure et supérieure sont fonction des premier et dernier objets de ladite succession.

7. Procédé de localisation selon la revendication 6, **caractérisé en ce que** ladite borne inférieure, respectivement supérieure, dudit intervalle de mapping est déterminée en fonction du rapport de la longueur d'un vecteur reliant ledit noeud d'origine dudit arc et ledit premier objet de ladite succession, respectivement ledit dernier objet de ladite succession et ledit noeud de destination dudit arc, et de la longueur dudit arc.

8. Programme d'ordinateur comprenant des instructions de code de programme pour l'exécution des étapes du procédé de localisation selon l'une quelconque des revendications 1 à 7 lorsque ledit programme est exécuté par un microprocesseur.

9. Produit programme d'ordinateur comprenant des instructions de code de programme enregistré sur un support utilisable dans ou par un ordinateur, ledit programme permettant la localisation au sein d'un réseau d'un élément associé à une position géographique,

ledit programme comprenant des moyens de programmation lisibles par ordinateur pour effectuer une étape de mise en correspondance de ladite position géographique et d'un graphe représentatif dudit réseau, **caractérisé en ce que** ledit produit programme d'ordinateur comprend également :

- des moyens de programmation lisibles par ordinateur pour accéder à une unité de mémorisation dudit graphe sous la forme d'une liste d'objets comprenant au moins deux noeuds ;
- des moyens de programmation lisibles par ordinateur pour effectuer une sous-étape d'ajout à ladite liste d'objets d'au moins un objet correspondant à un sommet intermédiaire sur un arc dudit graphe, un arc étant borné par deux noeuds dudit graphe, à savoir un noeud d'origine et un noeud de destination ;
- des moyens de programmation lisibles par ordinateur pour effectuer une sous-étape de détermination d'au moins un objet de ladite liste d'objets, appelé objet sélectionné, correspondant sensiblement à ladite position géographique.

10. Dispositif de localisation, au sein d'un réseau, d'un élément associé à une position géographique, comprenant des moyens de mise en correspondance de ladite position géographique et d'un graphe représentatif dudit réseau, **caractérisé en ce qu'**il comprend des moyens d'accès à une unité de mémorisation dudit graphe sous la forme d'une liste d'objets comprenant au moins deux noeuds, et **en ce que** lesdits moyens de mise en correspondance comprennent des moyens de :

- ajout à ladite liste d'objets d'au moins un objet correspondant à un sommet intermédiaire sur un arc dudit graphe, un arc étant borné par deux noeuds dudit graphe, à savoir un noeud d'origine et un noeud de destination ;
- détermination d'au moins un objet de ladite liste d'objets, appelé objet sélectionné, correspondant sensiblement à ladite position géographique.

**Claims**

1. Process for locating, within a network, an element associated with a geographical position, including a step of correlating said geographical position and a graph representing said network, **characterised in that** said graph representing said network is stored in the form of a list of objects comprising at least two nodes, and **in that** said correlating step comprises successive substeps of:

   - adding to said list of objects at least one object corresponding to at least one intermediate apex on an arc of said graph, an arc being bounded by two nodes of said graph, namely an origin node and a destination node;
   - determining at least one object from said list of objects, called the selected object, corresponding to a position neighbouring said geographical position.

2. Locating process according to Claim 1, **characterised in that** said list of objects also includes at least one apex corresponding to an articulation between two edges of one of said arcs.

3. Locating process according to either one of Claims 1 and 2, **characterised in that** the distance from said selected object(s) to said geographical position is less than a predetermined radius of selection.

4. Locating process according to any one of Claims 1 to 3, **characterised in that** said geographical position is expressed in the form of a pair of coordinates (x, y) in a Cartesian coordinate system.

5. Locating process according to any one of Claims 1 to 4, **characterised in that** said intermediate apex/apices is/are constructed by oversampling of one of said arcs, each of said intermediate apices being remote from a neighbouring node or apex by a predetermined oversampling distance.

6. Locating process according to any one of Claims 1 to 5, **characterised in that** since said selected objects form a sequence of nodes and/or apices of one of said arcs, said process also includes a step of searching for relative positioning of said element on said arc, yielding an interval, called the mapping interval, the upper and lower boundaries of which are a function of the first and last objects of said sequence.

7. Locating process according to Claim 6, **characterised in that** said lower, respectively upper, boundary of said mapping interval is determined as a function of the ratio of the length of a vector linking said origin node of said arc and said first object of said sequence, respectively said last object of said sequence and said destination node of said arc, and the length of said arc.

8. Computer program comprising program-code instructions for executing the steps of the locating process according to any one of Claims 1 to 7 when said program is executed by a microprocessor.

**9.** Computer-program product comprising program-code instructions recorded on a medium that is capable of being utilised in or by a computer, said program enabling the locating within a network of an element associated with a geographical position, said program comprising computer-readable programming means for performing a step of correlating said geographical position and a graph representing said network, **characterised in that** said computer-program product also includes:

- computer-readable programming means for accessing a unit for storing said graph in the form of a list of objects comprising at least two nodes;
- computer-readable programming means for performing a sub-step of adding to said list of objects at least one object corresponding to an intermediate apex on an arc of said graph, an arc bounded by two nodes of said graph, namely an origin node and a destination node,
- computer-readable programming means for performing a sub-step of determining at least one object of said list of objects, called the selected object, corresponding substantially to said geographical position.

**10.** Device for locating, within a network, an element associated with a geographical position, including means for correlating said geographical position and a graph representing said network, **characterised in that** said device includes means for accessing a unit for storing said graph in the form of a list of objects comprising at least two nodes, and **in that** said correlating means comprise means for:

- adding to said list of objects at least one object corresponding to an intermediate apex on an arc of said graph, an arc being bounded by two nodes of said graph, namely an origin node and a destination node;
- determining at least one object of said list of objects, called the selected object, corresponding substantially to said geographical position.

**Patentansprüche**

**1.** Verfahren zum Orten eines einem geografischen Standort zugeordneten Elementes in einem Netz, umfassend einen Schritt des in Übereinstimmung Bringens des geografischen Standorts und eines Graphen umfasst, der das Netz repräsentiert, **dadurch gekennzeichnet, dass** der Graph, der das Netz repräsentiert, in Form einer Liste von Objekten gespeichert wird, die mindestens zwei Knoten umfasst,

und dadurch, dass der Schritt des in Übereinstimmung Bringens die folgenden aufeinanderfolgenden Teilschritte umfasst:

- Hinzufügen von mindestens einem Objekt zu der Liste von Objekten, das mindestens einem Zwischenscheitel auf einem Bogen des Graphen entspricht, wobei ein Bogen durch zwei Knoten des Graphen, nämlich einen Ausgangsknoten und einen Zielknoten, begrenzt ist;
- Bestimmen mindestens eines Objekts aus der Liste von Objekten, das ausgewähltes Objekt genannt wird und einem Standort entspricht, der zu dem geografischen Standort benachbart ist.

**2.** Ortungsverfahren nach Anspruch 1, **dadurch gekennzeichnet, dass** die Liste von Objekten auch mindestens einen Scheitel umfasst, der einem Gelenk zwischen zwei Kanten eines der Bögen entspricht.

**3.** Ortungsverfahren nach einem der Ansprüche 1 und 2, **dadurch gekennzeichnet, dass** die Entfernung des ausgewählten Objekts oder der ausgewählten Objekte zum geografischen Standort geringer ist als ein vorbestimmter Auswahlradius.

**4.** Ortungsverfahren nach einem der Ansprüche 1 bis 3, **dadurch gekennzeichnet, dass** der geografische Standort in der Form eines Koordinatenpaars (x, y) in einem kartesischen Koordinatensystem ausgedrückt ist.

**5.** Ortungsverfahren nach einem der Ansprüche 1 bis 4, **dadurch gekennzeichnet, dass** der oder die Zwischenscheitel durch Überabtastung eines der Bögen konstruiert wird/werden, wobei jeder der Zwischenscheitel von einem benachbarten Knoten oder Scheitel in einer vorbestimmten Überabtastungsentfernung entfernt ist.

**6.** Ortungsverfahren nach einem der Ansprüche 1 bis 5, **dadurch gekennzeichnet, dass** die ausgewählten Objekte eine Folge von Knoten und/oder Scheiteln von einem der Bögen bilden, wobei das Verfahren auch einen Schritt des Suchens der relativen Positionierung des Elements auf dem Bogen umfasst, der ein Intervall liefert, das "Mapping-Intervall" genannt wird, dessen untere und obere Grenzen eine Funktion des ersten und letzten Objekts der Folge sind.

**7.** Ortungsverfahren nach Anspruch 6, **dadurch gekennzeichnet, dass** die untere beziehungsweise die obere Grenze des Mapping-Intervalls als Funktion des Verhältnisses der Länge eines Vektors, der den Ausgangsknoten des Bogens und das erste Objekt der Folge, beziehungsweise das letzte Objekt der Folge und den Zielknoten des Bogens verbindet, und der Länge des Bogens bestimmt wird.

8. Computerprogramm, das Programmcodebefehle zur Ausführung der Schritte des Ortungsverfahrens nach einem der Ansprüche 1 bis 7 aufweist, wenn das Programm durch einen Mikroprozessor ausgeführt wird.

9. Computerprogrammprodukt, das Programmcodebefehle aufweist, die auf einem in oder durch einen Computer verwendbaren Träger gespeichert sind, wobei das Programm die Ortung eines einem geografischen Standort zugeordneten Elementes in einem Netz ermöglicht, wobei das Programm maschinenlesbare Programmiermittel zum Durchführen eines Schritts des in Übereinstimmung Bringens des geografischen Standorts und eines Graphen umfasst, der das Netz repräsentiert, **dadurch gekennzeichnet, dass** das Computerprogrammprodukt ferner Folgendes aufweist:

   - maschinenlesbare Programmiermittel zum Zugreifen auf eine Einheit zum Speichern des Graphen in der Form von einer Liste von Objekten, die mindestens zwei Knoten umfassen;
   - maschinenlesbare Programmiermittel zum Durchführen eines Teilschritts des Hinzufügens von mindestens einem Objekt zu der Liste von Objekten, das einem Zwischenscheitel auf einem Bogen des Graphen entspricht, wobei ein Bogen durch zwei Knoten des Graphen begrenzt ist, nämlich einen Ausgangsknoten und einen Zielknoten;
   - maschinenlesbare Programmiermittel zum Durchführen eines Teilschritts des Bestimmens von mindestens einem Objekt von der Liste von Objekten, welches ausgewähltes Objekt genannt wird und im Wesentlichen dem geografischen Standort entspricht.

10. Vorrichtung zum Orten eines zu einem geografischen Standort gehörenden Elementes in einem Netz, welche Mittel zum in Übereinstimmung Bringen des geografischen Standorts und eines Graphen aufweist, der das Netz repräsentiert; **dadurch gekennzeichnet, dass** sie Mittel zum Zugreifen auf eine Einheit zum Speichern des Graphen in Form einer Liste von Objekten umfasst, die mindestens zwei Knoten umfasst, und dadurch, dass die Mittel zum in Übereinstimmung Bringen Mittel umfassen zum:

   - Hinzufügen mindestens eines Objekts zu der Liste von Objekten, das einem Zwischenscheitel auf einem Bogen des Graphen entspricht, wobei ein Bogen durch zwei Knoten des Graphen begrenzt ist, nämlich einen Ausgangsknoten und einen Zielknoten;
   - Bestimmen mindestens eines Objekts der Liste von Objekten, welches ausgewähltes Objekt genannt wird und im Wesentlichen dem geografischen Standort entspricht.

EP 1 856 481 B1

Fig. 1

Fig. 2

Fig. 3

Fig. 4a

Fig. 4b

Fig. 5a

Fig. 5b

Fig. 5c

Fig. 5d

Fig. 5e

Fig. 5f

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1492072 A

- EP 1441197 A